# EUROPEAN PATENT APPLICATION

(11) **EP 4 847 650 A1**
(43) Date of publication of application: **02.12.2026**
(21) Application number: 25769446.3
(22) Date of filing: 07.03.2025
(51) Int. Cl.: C22C 38/00, B21B 1/22, B23K 9/23, B23K 9/167, B23K 20/04, C21D 8/02, C22C 30/00, C22C 30/02, C22C 38/58

(54) **CLAD STEEL SHEET, WELDED JOINT, AND METHOD FOR MANUFACTURING SAME**

(30) Priority: 12.03.2024 JP 2024037827
(71) Applicant: JFE Steel Corporation, Tokyo 100-0011 (JP)
(72) Inventor: IMAYAMA, Hikaru, Tokyo 100-0011 (JP); IZUMI, Daichi, Tokyo 100-0011 (JP); IKEDA, Hiroshi, Tokyo 100-0011 (JP); SHIMAMURA, Junji, Tokyo 100-0011 (JP)
(74) Representative: Hoffmann Eitle
(86) International application number: PCT/JP2025/008539
(87) International publication number: WO 2025/192475

(57) **Abstract**

Provided are: a high-strength clad steel plate and a welded joint that have high ammonia SCC resistance, high low-temperature toughness, and good bondability and that are suitable for tanks or the like for transporting or storing liquid ammonia; and methods for producing the clad steel plate and the welded joint.

The clad steel plate includes: a base metal having a predetermined chemical composition; and a cladding metal having a predetermined chemical composition and provided on at least one surface (surface serving as an inner surface). The base metal has a tensile strength of 620 MPa or more and an absorbed energy of 47 J or more in a Charpy impact test at -50°C. The bonding ratio between the base metal and the cladding metal is 70% or more.

## Description

### Technical Field

The present invention relates to a high-strength clad steel plate having low-temperature toughness and high stress corrosion cracking resistance, and to a welded joint including the high-strength clad steel plate. In particular, the present invention relates to a high-strength clad steel plate suitable for structural members, such as tanks, used in a liquid ammonia environment, and to a welded joint including the high-strength clad steel plate. The present invention also relates to methods for producing the high-strength clad steel plate and the welded joint.

### Background Art

In a liquid ammonia environment, carbon steel may undergo stress corrosion cracking caused by liquid ammonia (hereinafter referred to as ammonia SCC (stress corrosion cracking)). Therefore, steel materials having low ammonia SCC susceptibility have been used for carbon steel structures for handling liquid ammonia, such as piping, storage tanks, tank cars, and line pipes, and operational measures have also been taken to suppress ammonia SCC.

For example, ammonia SCC is known to correlate with the strength and hardness of a material. When carbon steel is used, a material having a tensile strength of less than 600 MPa is preferably used. Ammonia SCC is also known to occur in weld heat-affected zones. Accordingly, use of high-strength steel in a liquid ammonia environment requires measures, such as post-weld heat treatment by full annealing to adjust tensile strength and the hardness of welds.

In recent years, liquid ammonia has attracted attention as clean energy because liquid ammonia does not emit CO₂ during combustion, and liquid ammonia is expected to drive large-scale demand. Consequently, larger equipment to transport and store liquid ammonia is needed.

For larger tanks, use of high-strength steel is desired to reduce the thickness of steel materials used from the viewpoint of weight reduction and construction cost reduction.

For efficient operation of equipment for transportation and storage, the equipment may be used for both liquid ammonia and LPG. Since liquid ammonia and liquefied gases, such as LPG, are transported or stored at low temperatures, steel plates used for such applications are required to have high low-temperature toughness.

A method for achieving both such high strength and high ammonia SCC resistance is disclosed in Patent Literature 1. Patent Literature 1 describes a method for softening the surface of a steel material.

### Citation List

### Patent Literature

PTL 1: Japanese Examined Patent Application Publication No. 55-30062

### Summary of Invention

### Technical Problem

However, the method described in Patent Literature 1 requires heat treatment for a long time in order to soften the surface layer uniformly and sufficiently, and it is difficult to control the strength at the center of a steel plate. Therefore, there is a problem in terms of the strength of the steel plate.

An object of the present invention is to solve the above-described problem and to provide: a high-strength clad steel plate and a welded joint that have high ammonia SCC resistance, high low-temperature toughness, and good bondability and that are suitable for tanks or the like for transporting or storing liquid ammonia; and methods for producing the clad steel plate and the welded joint.

Whether ammonia SCC resistance is high is determined by the following procedure.

The clad steel plate according to the present invention is used such that the cladding metal comes into contact with ammonia or the like. Therefore, first, a test specimen measuring 1.5 to 3.0 mm in thickness × 15 mm × 115 mm is taken from a cladding metal portion by subjecting the clad steel plate to thickness reduction machining from the base metal side. When the cladding metal has a thickness of more than 3.0 mm, a test specimen having a thickness of 3.0 mm is taken from a surface of the cladding metal the surface of which is not bonded to the base metal. The obtained test specimen is subjected to ultrasonic degreasing in acetone for 5 minutes. A stress equivalent to 100% of the yield strength YS of the base metal corresponding to each test specimen is applied to the corresponding test specimen by four-point bending. The test specimen subjected to four-point bending is placed in a test cell. Subsequently, the test cell is filled with a solution prepared by mixing 2 L of liquid ammonia having a purity of 99.999% or more with ammonium carbamate: 5.00 mass%, O₂: 1.000 bar, and water: 0.10 mass%. Specifically, predetermined amounts of ammonium carbamate and water are placed in the test cell, O₂ gas is further blown into the test cell, and then liquid ammonia is placed in the test cell. The solution volume to specimen area ratio, which is the ratio of the volume of the immersion liquid to the surface area of the immersion test specimen, is 42 mL/cm². Stirring during the test is continuously performed at 10 rpm using a stirrer placed in the test cell. The temperature of the test liquid is set to 25°C. After the temperature of the test liquid is adjusted to 25°C, the corrosion potential of the test specimen is measured using a potentiostat. Measurement of the potential and application of the potential using the potentiostat are performed by a three-electrode method, and platinum electrodes are used as both a reference electrode and a counter electrode. When one hour has elapsed from the start of measurement of the corrosion potential, the potential is determined to have stabilized, and, at that time, the potential applied to the test specimen is controlled to be +0.5 V vs. Pt, and the immersion test is started. After 504 hours have elapsed from the start of the immersion test, the test specimen is taken out of the test cell. Corrosion products on the surface of the test specimen are removed, and cracking is visually observed on the surface and in the cross section of the specimen to evaluate cracking. In the present invention, nine test specimens are used for each condition in the 504 hour-immersion test. When cracks having a depth of 1.5 mm or more are observed in two or fewer test specimens among the nine test specimens, ammonia SCC resistance is determined to be good (○), namely, excellent; when such cracks occur in three or more test specimens, ammonia SCC resistance is determined to be poor (×).

Good low-temperature toughness means that the base metal exhibits an absorbed energy of 47 J or more in a Charpy impact test at -50°C in accordance with JIS Z 2242 (2023).

Good bondability means that, in the cross section including the base metal and the cladding metal, the bonding ratio represented by the following formula is 70% or more. Bonding ratio (%): 100 × bonding interface length (mm)/total measurement length (mm)
High strength means that the base metal has a tensile strength (TS) of 620 MPa or more as measured in accordance with JIS Z 2241 (2022).

### Solution to Problem

In order to achieve the above object, the inventors of the present invention have conducted intensive studies on various factors affecting the ammonia SCC resistance, low-temperature toughness, and strength properties of a steel plate. As a result, the inventors of the present invention have obtained the following finding.

Specifically, ammonia SCC occurs on the inner side of products (tanks), and the ammonia SCC resistance is mainly governed by the properties of a steel plate surface layer on the inner side. Therefore, the inventors of the present invention have conceived of producing a clad steel plate in which a steel plate having high strength and high low-temperature toughness is used as a base metal, and a steel plate having high ammonia SCC resistance is bonded to the base metal as a cladding metal.

The inventors of the present invention have found that such a clad steel plate provides high ammonia SCC resistance, high low-temperature toughness, and good strength properties.

Since the cladding metal used in the present invention is stainless steel, the clad steel plate according to the present invention has higher corrosion resistance than a clad steel plate using carbon steel as a cladding metal.

The present invention has been accomplished on the basis of the above finding. Specifically, the gist of the present invention is as described below.
[1] A clad steel plate including a cladding metal on at least one surface of a base metal,
   wherein the base metal has a chemical composition containing:
   in mass%,
      C: 0.030% to 0.170%,
      Si: 0.05% to 0.40%,
      Mn: 0.05% to 1.60%,
      P: 0.020% or less,
      S: 0.010% or less,
      Al: 0.018% to 0.070%,
      N: 0.0020% to 0.0080%, and
      O (oxygen): 0.0050% or less, and
   the base metal further containing one or two or more selected from:
      Cu: 0.50% or less,
      Ni: 2.10% or less,
      Cr: 0.70% or less,
      Mo: 0.60% or less,
      Nb: 0.040% or less,
      Ti: 0.020% or less,
      V: 0.100% or less,
      B: 0.0050% or less, and
      Ca: 0.0040% or less,
      with Pcm represented by formula (1) being 0.16 or more and 0.28 or less, and the balance being Fe and unavoidable impurities; and
      the cladding metal has a PRE value represented by formula (2) of 15 or more,
      the base metal has a tensile strength of 620 MPa or more,
      the base metal has an absorbed energy of 47 J or more in a Charpy impact test at -50°C, and
      a bonding ratio between the base metal and the cladding metal is 70% or more: 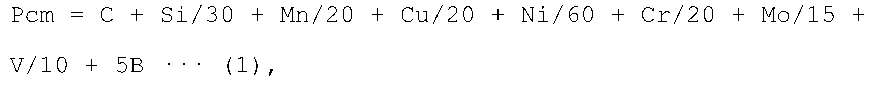 Pcm = C + Si/30 + Mn/20 + Cu/20 + Ni/60 + Cr/20 + Mo/15 + V/10 + 5B (1), $PRE = Cr % + 3.3 Mo % + 30 N % - Mn %$ (2),
   in formula (1), each element symbol represents a content (mass%) of a corresponding element in the base metal;
   in formula (2), M% represents a content (mass%) of element M in the cladding metal; and in each formula, a value for an element not contained is 0 (zero).
[2] A welded joint including the clad steel plate according to [1],
   wherein a weld heat-affected zone has an absorbed energy of 47 J or more in a Charpy impact test at -40°C.
[3] A method for producing the clad steel plate according to [1], the method including:
   heating a slab for the raw material of the base metal to a surface temperature of 900°C or more and 1200°C or less, and then hot-rolling the heated slab for the raw material of the base metal at a rolling finish temperature equal to or higher than an Ar₃ transformation temperature in terms of surface temperature to obtain a raw material of base metal;
   heating a slab for the raw material of the cladding metal and then hot-rolling the heated slab for the raw material of the cladding metal to obtain a raw material of cladding metal;
   heating, to a surface temperature of 1000°C or more and 1250°C or less, an assembled slab obtained by stacking the base metal and the cladding metal;
   then hot-rolling the heated assembled slab at a cumulative rolling reduction ratio of 65% or more and at a rolling finish temperature equal to or higher than the Ar₃ transformation temperature and equal to or lower than 1000°C to produce a rolled plate including the base metal and the cladding metal; and
   performing a treatment (A) or (B) below on the rolled plate:
      (A) subjecting the rolled plate after hot rolling to accelerated cooling from a temperature equal to or higher than the Ar₃ transformation temperature of the base metal to a cooling stop temperature of 500°C or less at an average cooling rate in a range of 3°C/s or more and 50°C/s or less, with or without subsequent tempering the rolled plate at a temperature of 700°C or less; or
      (B) cooling the rolled plate after hot rolling,
   then reheating the rolled plate to 800°C or more and 1000°C or less,
   subjecting the rolled plate to accelerated cooling from a temperature equal to or higher than the Ar₃ transformation temperature of the base metal to a cooling stop temperature of 350°C or less at an average cooling rate in a range of 1.0°C/s or more and 20.0°C/s or less, and
   then tempering the rolled plate at a temperature of 600°C or more and 750°C or less.
[4] A welded joint production method for producing a welded joint by performing welding using the clad steel plate according to [1] under a condition of a heat input of 50 kJ/cm or less.

### Advantageous Effects of Invention

The present invention can provide a high-strength clad steel plate that has high ammonia SCC resistance, high low-temperature toughness, and good bondability and that is suitable for structural members, such as tanks, used in a liquid ammonia environment.

### Description of Embodiments

The present invention is a clad steel plate having, on at least one surface of a base metal, a cladding metal that is a corrosion-resistant alloy. Specifically, the clad steel plate of the present invention includes a base metal and a cladding metal formed on at least one surface of the base metal.

Since the clad steel plate of the present invention has high ammonia SCC resistance and high low-temperature toughness, the clad steel plate of the present invention is suitable for structural members, such as tanks, used in a liquid ammonia environment. However, such an environment is not limited to liquid ammonia, and may be a liquefied gas, such as LPG or liquefied CO₂.

In the present invention, a surface having such a cladding metal may be located on either side of the base metal but is located on at least the side that comes into contact with ammonia or the like described above when used as the clad steel plate. Locating the cladding metal on the ammonia-contacting side contributes to achieving the ammonia SCC resistance and low-temperature toughness of the clad steel plate. In the present invention, the surface on the side that comes into contact with ammonia or the like is also referred to as an inner surface. The present invention is not limited only to a slab assembly (assembled slab) produced by stacking a base metal slab (a raw material for a base metal) and a cladding metal slab (a material for a cladding metal). For example, a slab assembly may be produced by adding elements to one or both surfaces of such a base metal slab in a gas atmosphere to form a surface region of the chemical composition of the cladding metal.

Embodiments of the present invention will be described below in more detail.

A clad steel plate according to the present invention includes a cladding metal on at least one surface of a base metal, wherein the base metal has a chemical composition containing: in mass%, C: 0.030% to 0.170%, Si: 0.05% to 0.40%, Mn: 0.05% to 1.60%, P: 0.020% or less, S: 0.010% or less, Al: 0.018% to 0.070%, N: 0.0020% to 0.0080%, and O (oxygen): 0.0050% or less, and the base metal further containing one or two or more selected from: Cu: 0.50% or less, Ni: 2.10% or less, Cr: 0.70% or less, Mo: 0.60% or less, Nb: 0.040% or less, Ti: 0.020% or less, V: 0.100% or less, B: 0.0050% or less, and Ca: 0.0040% or less, with Pcm represented by formula (1) being 0.16 or more and 0.28 or less, and the balance being Fe and unavoidable impurities; and
the cladding metal has a PRE value represented by formula (2) of 15 or more,
the base metal has a tensile strength of 620 MPa or more, the base metal has an absorbed energy of 47 J or more in a Charpy impact test at -50°C, and the bonding ratio between the base metal and the cladding metal is 70% or more. 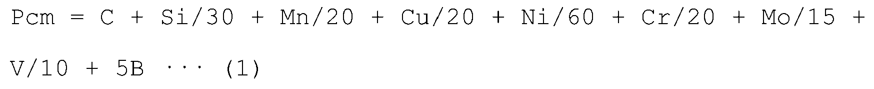 Pcm = C + Si/30 + Mn/20 + Cu/20 + Ni/60 + Cr/20 + Mo/15 + V/10 + 5B (1) $PRE = Cr % + 3.3 Mo % + 30 N % - Mn %$ (2)

In formula (1), each element symbol represents a content (mass%) of a corresponding element in the base metal;
in formula (2), M% represents a content (mass%) of element M in the cladding metal; and in each formula, a value for an element not contained is 0 (zero).

Unless otherwise specified, the unit "%" indicating the content of each component element described below means "mass%."

### (1) Chemical Composition of Base Metal

### C: 0.030% to 0.170%

C is the most effective element for increasing the strength of a steel plate produced by cooling according to the present invention. To obtain this effect, the C content is specified to be 0.030% or more. From the viewpoint of reducing the contents of other alloying elements and enabling lower-cost production, the C content is preferably 0.040% or more, and more preferably 0.050% or more.

When the C content exceeds 0.170%, the toughness and weldability of the steel plate deteriorate. Accordingly, the C content is specified to be 0.170% or less. From the viewpoint of toughness, the C content is preferably 0.160% or less, and more preferably 0.150% or less.

### Si: 0.05% to 0.40%

Si is added to improve the strength of the steel plate and is also added for deoxidization. To obtain such effects, the Si content is specified to be 0.05% or more. The Si content is preferably 0.07% or more, and more preferably 0.10% or more.

When the Si content exceeds 0.40%, toughness and weldability deteriorate. Accordingly, the Si content is specified to be 0.40% or less. The Si content is preferably 0.35% or less.

### Mn: 0.05% to 1.60%

Mn is an element having an effect of increasing the hardenability of steel and is one of the important elements that are required to be added to achieve high strength as in the present invention. To obtain such effects, the Mn content is specified to be 0.05% or more. From the viewpoint of reducing the contents of other alloying elements and enabling lower-cost production, the Mn content is preferably 0.20% or more.

When the Mn content exceeds 1.60%, weldability deteriorates. Accordingly, the Mn content is specified to be 1.60% or less. The Mn content is preferably 1.55% or less.

### P: 0.020% or Less

P is an element contained as an unavoidable impurity and exerts adverse effects such as reducing toughness and weldability by segregating at grain boundaries. Therefore, the P content is preferably as low as possible, but a P content of 0.020% or less is acceptable. The P content is preferably 0.015% or less.

The lower limit of the P content is not limited and may be 0%. Since P is normally an element unavoidably contained in steel as an impurity, the P content may industrially exceed 0%. Since an excessive reduction leads to an increase in refining cost, the P content is preferably 0.001% or more, and more preferably 0.003% or more.

### S: 0.010% or Less

S is an element contained as an unavoidable impurity. S is present in steel as sulfide inclusions, such as MnS, and exerts adverse effects such as reducing the toughness of the steel plate by serving as fracture initiation sites. Therefore, the S content is preferably as low as possible, but an S content of 0.010% or less is acceptable. The S content is preferably 0.005% or less, and more preferably 0.003% or less.

The lower limit of the S content is not limited and may be 0%. S is normally an element unavoidably contained in steel as an impurity; therefore, the S content may industrially exceed 0%. Since an excessive reduction leads to an increase in refining cost, the S content is preferably 0.001% or more from the viewpoint of cost.

### Al: 0.018% to 0.070%

Al acts as a deoxidizing agent. To obtain such an effect, the Al content is specified to be 0.018% or more. The Al content is preferably 0.025% or more.

When the Al content exceeds 0.070%, oxide inclusions increase, and cleanliness decreases, resulting in degraded toughness. Accordingly, the Al content is specified to be 0.070% or less. From the viewpoint of preventing deterioration in toughness, the Al content is preferably 0.060% or less, and more preferably 0.050% or more.

### N: 0.0020% to 0.0080%

N may improve the toughness of welds by forming TiN. To obtain such an effect, the N content is required to be 0.0020% or more. The N content is preferably 0.0025% or more.

When the N content exceeds 0.0080%, toughness rather decreases. Accordingly, the N content is specified to be in the range of 0.0020% to 0.0080%. The N content is preferably 0.0070% or less, more preferably 0.0060% or less, and even more preferably 0.0050% or less.

### O (Oxygen): 0.0050% or Less

O (oxygen) is an element contained as an unavoidable impurity. O is present in steel as oxides, such as Al₂O₃, and exerts adverse effects such as reducing the toughness of the steel plate by serving as fracture initiation sites. Therefore, the O content is preferably as low as possible, but an O content of 0.0050% or less is acceptable. The O content is preferably 0.0040% or less, and more preferably 0.0030% or less.

The lower limit of the O content is not limited and may be 0%. O is normally an element unavoidably contained in steel as an impurity; therefore, the O content may industrially exceed 0%. Since an excessive reduction leads to an increase in refining cost, the O content is preferably 0.0005% or more, and more preferably 0.0010% or more, from the viewpoint of cost.

In addition to the above-described components in the base metal of the present invention, the base metal further contains one or two or more of the elements described below, with the balance being Fe and unavoidable impurities. The unavoidable impurities mean impurities that are unavoidably introduced from raw materials, production processes, production equipment, or the like, and may be contained to the extent that they do not impair the object of the present invention. Examples of the raw materials include iron ore, reduced iron, and scrap. Examples of the impurities include Co, Sn, Zn, Pb, As, Sb, Bi, H, and REM.

### Cu: 0.50% or Less

Cu is an element effective for improving the strength of the steel plate. When Cu is contained from the viewpoint of the strength of the steel plate, the Cu content is preferably 0.05% or more. The Cu content is more preferably 0.10% or more, and even more preferably 0.15% or more.

When the Cu content exceeds 0.50%, surface flaws occur in the steel plate. When the Cu content exceeds 0.50%, toughness deteriorates. Accordingly, when Cu is contained, the Cu content is 0.50% or less. The Cu content is preferably 0.45% or less, and more preferably 0.40% or less.

### Ni: 2.10% or Less

Ni is not only effective for improving the strength of the steel plate, but also has an effect of improving the toughness of the base metal and weld heat-affected zones. From the viewpoint of the strength and toughness of the steel plate, the Ni content is preferably 0.05% or more when Ni is contained. The Ni content is more preferably 0.10% or more.

When the Ni content exceeds 2.10%, surface flaws occur in the steel plate. Accordingly, when Ni is contained, the Ni content is 2.10% or less. The Ni content is preferably 2.00% or less, more preferably 1.80% or less, and even more preferably 1.50% or less.

### Cr: 0.70% or Less

Cr is an element effective for improving the strength of the steel plate. From the viewpoint of the strength of the steel plate, the Cr content is preferably 0.05% or more when Cr is contained. The Cr content is more preferably 0.10% or more.

When the Cr content exceeds 0.70%, the toughness of the steel plate deteriorates. Accordingly, when Cr is contained, the Cr content is 0.70% or less. The Cr content is preferably 0.60% or less.

### Mo: 0.60% or Less

Mo is an element effective for improving the strength of the steel plate. From the viewpoint of the strength of the steel plate, the Mo content is preferably 0.05% or more when Mo is contained. The Mo content is more preferably 0.10% or more.

When the Mo content exceeds 0.60%, the toughness of the steel plate deteriorates. Accordingly, when Mo is contained, the Mo content is 0.60% or less. The Mo content is preferably 0.55% or less.

### Nb: 0.040% or Less

Nb is an element that has an effect of improving toughness by precipitating as carbonitrides and thus reducing the prior austenite grain size. To obtain such an effect, the Nb content is preferably 0.005% or more when Nb is added. The Nb content is more preferably 0.007% or more.

When the Nb content exceeds 0.040%, a large amount of NbC precipitates, and toughness decreases. Accordingly, when Nb is contained, the Nb content is 0.040% or less. The Nb content is preferably 0.035% or less. The Nb content is more preferably 0.030% or less, and even more preferably 0.025% or less.

### Ti: 0.020% or Less

Ti is an element that has a strong tendency to form nitrides and has an effect of reducing solute N by fixing N. Therefore, inclusion of Ti may improve the toughness of welds. To obtain such effects, the Ti content is preferably 0.005% or more. The Ti content is more preferably 0.008% or more.

When the Ti content exceeds 0.020%, toughness rather decreases. Accordingly, when Ti is contained, the Ti content is 0.020% or less. The Ti content is preferably 0.017% or less.

### V: 0.100% or Less

V is an element effective for improving the strength of the steel plate. From the viewpoint of the strength of the steel plate, the V content is preferably 0.005% or more when V is contained. The V content is more preferably 0.030% or more.

When the V content exceeds 0.100%, the toughness of the steel plate deteriorates. Accordingly, when V is contained, the V content is 0.100% or less. The V content is preferably 0.080% or less, and more preferably 0.050% or less.

### B: 0.0050% or Less

B is an element effective for improving the strength of the steel plate. From the viewpoint of the strength of the steel plate, the B content is preferably 0.0005% or more. The B content is more preferably 0.0008% or more.

When the B content exceeds 0.0050%, the toughness of the steel plate deteriorates. Accordingly, when B is contained, the B content is 0.0050% or less. The B content is preferably 0.0040% or less, and more preferably 0.0030% or more.

### Ca: 0.0040% or Less

Ca is an element that has an effect of suppressing formation of MnS and the like, which elongate in the rolling direction, by combining with S. In other words, addition of Ca allows shape control of sulfide inclusions such that the sulfide inclusions have a spherical shape, and Ca may improve the toughness of welds and the like. To obtain such an effect, the Ca content is preferably 0.0005% or more when Ca is contained. The Ca content is more preferably 0.0010% or more.

When the Ca content exceeds 0.0040%, the cleanliness of steel decreases. Accordingly, when Ca is contained, the Ca content is 0.0040% or less. The Ca content is preferably 0.0030% or less.

### Pcm: 0.16 or More and 0.28 or Less

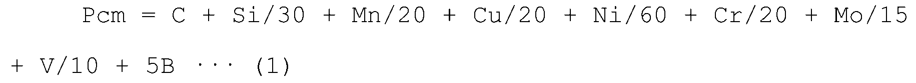

Pcm = C + Si/30 + Mn/20 + Cu/20 + Ni/60 + Cr/20 + Mo/15 + V/10 + 5B (1) In formula (1), each element symbol represents the content (mass%) of a corresponding element in the base metal, and is 0 (zero) for an element not contained.

Pcm is an index for evaluating the threshold for occurrence of cold crack of weld. When Pcm exceeds 0.28, base metal toughness and weldability significantly deteriorate. Accordingly, the upper limit of Pcm is set to 0.28. Pcm is preferably 0.26 or less.

When Pcm is less than 0.16, desired strength is not obtained. Accordingly, the lower limit of Pcm is set to 0.16. Pcm is preferably 0.18 or more.

### (2) Cladding Metal

### PRE Value: 15 or More

$PRE = Cr % + 3.3 Mo % + 30 N % - Mn %$ (2) In formula (2), M% represents the content (mass%) of element M in the cladding metal and is 0 (zero) for element M not contained.

PRE is a pitting resistance equivalent and is determined from PRE = Cr% + 3.3Mo% + 30N% - Mn%. A higher PRE value results in lower liquid ammonia SCC susceptibility. Accordingly, the PRE value of the cladding metal is specified to be 15 or more.

The PRE value of the cladding metal is preferably as high as possible, but an excessively high PRE value leads to an increase in cost. Accordingly, the PRE value is preferably 55 or less, and more preferably 27 or less. The cladding metal is preferably stainless steel. The microstructure of the stainless steel is not limited; however, from the viewpoint of improving the toughness of the cladding metal and weld heat-affected zones, the stainless steel is preferably austenitic stainless steel or duplex stainless steel. The cladding metal may be a Ni-based alloy.

The chemical composition of the cladding metal is not limited as long as the chemical composition of the cladding metal satisfies a PRE value of 15 or more. More specifically, the chemical composition of the cladding metal preferably contains, in mass%, C: 0.001% to 0.080%, Si: 0.05% to 1.00%, Mn: 0.30% to 4.00%, P: 0.045% or less, S: 0.030% or less, Ni: 0.05% to 80.0%, Cr: 11.0% to 28.0%, N: 0.005% to 0.400%, and O (oxygen): 0.0050% or less, with the balance being Fe and unavoidable impurities.

The chemical composition of the cladding metal may further contain, as necessary, Cu: 3.00% or less, Mo: 5.50% or less, V: 0.100% or less, Nb: 3.00% or less, Ti: 1.00% or less, B: 0.0050% or less, Ca: 0.0040% or less, Al: 0.50% or less, Co: 1.20% or less, and Ta: 3.00% or less.

Embodiments of the present invention will be described below in detail.

### C: 0.001% to 0.080%

C is the most effective element for increasing the strength of a steel plate produced by cooling according to the present invention. To obtain such an effect, the C content is preferably 0.001% or more. From the viewpoint of reducing the contents of other alloying elements and enabling lower-cost production, the C content is more preferably 0.010% or more.

When the C content exceeds 0.080%, carbides may precipitate at crystal grain boundaries, which may cause stress corrosion cracking upon contact with liquid ammonia. Therefore, the C content is preferably 0.080% or less. From the viewpoint of toughness, the C content is more preferably 0.050% or less.

### Si: 0.05% to 1.00%

Si is added to improve the strength of the steel plate and is also added for deoxidization. To obtain such an effect, the Si content is preferably 0.05% or more. The Si content is more preferably 0.07% or more.

When the Si content exceeds 1.00%, toughness and weldability may deteriorate. Therefore, the Si content is preferably 1.00% or less. The Si content is more preferably 0.80% or less.

### Mn: 0.30% to 4.00%

Mn is an element having an effect of increasing the hardenability of steel and is one of the important elements that are required to be added for deoxidization. To obtain such an effect, the Mn content is preferably 0.30% or more. From the viewpoint of reducing the contents of other alloying elements and enabling lower-cost production, the Mn content is more preferably 0.40% or more.

When the Mn content exceeds 4.00%, weldability may deteriorate. Therefore, the Mn content is preferably 4.00% or less. The Mn content is more preferably 3.00% or less.

### P: 0.045% or Less

P is an element contained as an unavoidable impurity and may exert adverse effects such as reducing toughness and weldability by segregating at grain boundaries. Therefore, the P content is preferably as low as possible, but a P content of 0.045% or less is acceptable. The P content is more preferably 0.040% or less.

The lower limit of the P content is not limited and may be 0%. Since P is normally an element unavoidably contained in steel as an impurity, the P content may industrially exceed 0%. Since an excessive reduction leads to an increase in refining cost, the P content is preferably 0.001% or more.

### S: 0.030% or Less

S is an element contained as an unavoidable impurity. S is present in steel as sulfide inclusions, such as MnS, and may exert adverse effects such as reducing the toughness of the steel plate by serving as fracture initiation sites. Therefore, the S content is preferably as low as possible, but an S content of 0.030% or less is acceptable. The S content is more preferably 0.025% or less. The lower limit of the S content is not limited and may be 0%. S is normally an element unavoidably contained in steel as an impurity; therefore, the S content may industrially exceed 0%. Since an excessive reduction leads to an increase in refining cost, the S content is preferably 0.001% or more from the viewpoint of cost.

### Ni: 0.05% to 80.0%

Ni is an element effective for improving the corrosion resistance of stainless steel and Ni-based alloys to various acids. Ni is not only effective for improving the strength of the steel plate, but also has an effect of improving the toughness of the base metal and weld heat-affected zones. However, when the Ni content is less than 0.05%, such effects are insufficient. Therefore, the Ni content is preferably 0.05% or more. The Ni content is more preferably 0.10% or more.

Ni is an expensive metal, and from the viewpoint of alloy cost, the Ni content is preferably 80.0% or less. The Ni content is more preferably 46.0% or less. When stainless steel is used as a cladding metal instead of a Ni-based alloy, the Ni content may be 25.0% or less, 20.0% or less, 13.0% or less, or 10.0% or less.

### Cr: 11.0% to 28.0%

Cr is an element effective for improving the corrosion resistance of stainless steel. To prevent stress corrosion cracking upon contact with liquid ammonia, the Cr content is preferably 11.0% or more. The Cr content is more preferably 13.0% or more.

When the Cr content exceeds 28.0%, the toughness of duplex stainless steel and the corrosion resistance of welds may deteriorate. Therefore, the Cr content is preferably 28.0% or less. The Cr content is more preferably 26.0% or less.

### N: 0.005% to 0.400%

N is an element effective for improving the corrosion resistance and strength of stainless steel. To obtain such an effect, the N content is preferably 0.005% or more. The N content is more preferably 0.010% or more.

When the N content exceeds 0.400%, toughness may rather decrease. Therefore, the N content is preferably 0.400% or less. The N content is more preferably 0.300% or less.

### O (Oxygen): 0.0050% or Less

O is an element contained as an unavoidable impurity. O is present in steel as oxides, such as Al₂O₃, and exerts adverse effects such as reducing the toughness of the steel plate by serving as fracture initiation sites. Therefore, the O content is preferably as low as possible, but an O content of 0.0050% or less is acceptable. The lower limit of the O content is not limited and may be 0%. O is normally an element unavoidably contained in steel as an impurity; therefore, the O content may industrially exceed 0%. Since an excessive reduction leads to an increase in refining cost, the O content is preferably 0.0005% or more from the viewpoint of cost.

In addition to the above-described components in the cladding metal of the present invention, the cladding metal may further contain, as necessary, the following components. The balance is Fe and unavoidable impurities. The unavoidable impurities mean impurities that are unavoidably introduced from raw materials, production processes, production equipment, or the like, and may be contained to the extent that they do not impair the object of the present invention. Examples of the raw materials include iron ore, reduced iron, and scrap. Examples of the impurities include Sn, Zn, Pb, As, Sb, Bi, H, and REM.

### Cu: 3.00% or Less

Cu is an element effective for improving the corrosion resistance and strength of the steel plate. However, when the Cu content is less than 0.05%, such an effect is insufficient. Therefore, when Cu is contained, the Cu content is preferably 0.05% or more. The Cu content is more preferably 0.10% or more.

When the Cu content exceeds 3.00%, hot workability may significantly decrease. Therefore, when Cu is contained, the Cu content is preferably in the range of 3.00% or less. The Cu content is more preferably 2.20% or less.

### Mo: 5.50% or Less

Mo is an element effective for improving the pitting corrosion resistance of stainless steel. However, when the Mo content is less than 0.05%, such an effect is insufficient. Therefore, when Mo is contained, the Mo content is preferably 0.05% or more. The Mo content is more preferably 0.10% or more.

When the Mo content exceeds 5.50%, sigma phase precipitation may be promoted. For example, in duplex stainless steel, the cooling rate of the steel plate may affect the sigma phase precipitation, which may cause a significant deterioration in corrosion resistance. Therefore, when Mo is contained, the Mo content is preferably 5.50% or less. The Mo content is more preferably 5.00% or less.

### V: 0.100% or Less

Since V combines with C more easily than Cr does, V is an element effective for suppressing deterioration in corrosion resistance caused by formation of Cr carbides. However, when the V content is less than 0.005%, such an effect is insufficient. Therefore, when V is contained, the V content is preferably 0.005% or more. The V content is more preferably 0.010% or more.

From the viewpoint of alloy cost, the V content is preferably 0.100% or less when V is contained. The V content is more preferably 0.080% or less.

### Nb: 3.00% or Less

Since Nb combines with C more easily than Cr does, Nb is an element effective for suppressing deterioration in corrosion resistance caused by formation of Cr carbides. However, when the Nb content is less than 0.005%, such an effect is insufficient. Therefore, when Nb is contained, the Nb content is preferably 0.005% or more. The Nb content is more preferably 0.010% or more.

From the viewpoint of alloy cost, the Nb content is preferably 3.00% or less when Nb is contained. The Nb content is more preferably 2.50% or less.

### Ti: 1.00% or Less

Since Ti combines with C more easily than Cr does, Ti is an element effective for suppressing deterioration in corrosion resistance caused by formation of Cr carbides. However, when the Ti content is less than 0.01%, such an effect is insufficient. Therefore, when Ti is contained, the Ti content is preferably 0.01% or more. The Ti content is more preferably 0.05% or more, and even more preferably 0.07% or more.

From the viewpoint of alloy cost, the Ti content is preferably 1.00% or less. The Ti content is more preferably 0.90% or less.

### B: 0.0050% or Less

B is an element effective for improving the strength of the steel plate. However, when the B content is less than 0.0005%, such an effect is insufficient. Therefore, when B is contained, the B content is preferably 0.0005% or more. The B content is more preferably 0.0008% or more.

When the B content exceeds 0.0050%, the toughness of the steel plate may deteriorate. Accordingly, when B is contained, the B content is preferably 0.0050% or less. The B content is more preferably 0.0040% or less.

### Ca: 0.0040% or Less

Ca is an element that has an effect of suppressing formation of MnS and the like, which elongate in the rolling direction, by combining with S. In other words, addition of Ca allows shape control of sulfide inclusions such that the sulfide inclusions have a spherical shape, and Ca may improve the toughness of welds and the like. To obtain such an effect, the Ca content is preferably 0.0005% or more when Ca is contained. The Ca content is more preferably 0.0010% or more.

When the Ca content exceeds 0.0040%, there is a concern that the cleanliness of the steel may decrease. Accordingly, when Ca is contained, the Ca content is preferably 0.0040% or less. The Ca content is more preferably 0.0030% or less.

### Al: 0.50% or Less

Al is an effective deoxidizing element. Since this effect is sufficiently exhibited at an Al content of 0.02% or more, the Al content is preferably 0.02% or more when Al is contained. However, when the Al content exceeds 0.50%, stress corrosion cracking resistance deteriorates. Therefore, when Al is contained, the Al content is preferably 0.50% or less, and more preferably 0.30% or less.

### Co: 1.20% or Less

Co is also an element that improves corrosion resistance, and this effect is exhibited when the Co content is 0.01% or more. Therefore, the Co content is preferably 0.01% or more. However, when the Co content exceeds 1.20%, the alloy cost increases. Therefore, when Co is contained, the Co content is preferably 1.20% or less. The Co content is more preferably 0.05% or more. The Co content is more preferably 1.00% or less.

### Ta: 3.00% or Less

Ta is an element effective for fixing C. Since this effect is sufficiently exhibited at a Ta content of 0.02% or more, the Ta content is preferably 0.02% or more when Ta is contained. When the Ta content is excessive, Ta forms an intermetallic compound having a low melting point to reduce hot workability. Therefore, when Ta is contained, the Ta content is preferably 3.00% or less.

### (3) Properties of Clad Steel Plate

### [Tensile Strength]

In the clad steel plate of the present invention, the base metal has a tensile strength of 620 MPa or more. The upper limit of the tensile strength is not limited, but the high-strength steel plate of the present invention may have a tensile strength of less than 780 MPa.

### [Absorbed Energy in Charpy Impact Test]

In the clad steel plate of the present invention, the base metal has an absorbed energy of 47 J or more in a Charpy impact test at -50°C. In a welded joint including the clad steel plate of the present invention, the weld heat-affected zone has an absorbed energy of 47 J or more in a Charpy impact test at -40°C. When the clad steel plate is used as a structural member, such as a tank, PWHT (post weld heat treatment) is performed; however, PWHT may not be performed depending on the plate thickness. In such a case, the base metal is required to have a higher absorbed energy, and the absorbed energy of the base metal is preferably 100 J or more, and more preferably 170 J or more.

### [Bonding Ratio]

In the clad steel plate, there are portions in which oxides or voids are interposed between the base metal and the cladding metal, and portions in which the base metal and the cladding metal are directly bonded to each other. The bonding strength between the base metal and the oxides and the bonding strength between the cladding metal and the oxides are both lower than the bonding strength between the base metal and the cladding metal. Therefore, when the bonding ratio between the base metal and the cladding metal increases, the bonding strength of the clad steel plate increases, and then disbonding is less likely to occur during processing of the clad steel plate into a product. In the clad steel plate of the present invention, the bonding ratio between the base metal and the cladding metal is 70% or more. The bonding ratio between the base metal and the cladding metal is preferably 80% or more, and more preferably 85% or more. The upper limit of the bonding ratio between the base metal and the cladding metal is not limited, and the bonding ratio is preferably as high as possible and may be 100%.

### [Plate Thickness and Cladding Ratio]

The clad steel plate of the present invention may have a plate thickness of 7 mm or more. The plate thickness of the clad steel plate of the present invention is preferably 18 mm or more, and more preferably 23 mm or more. The clad steel plate of the present invention may have a plate thickness of 66 mm or less. The plate thickness of the clad steel plate of the present invention is preferably 53 mm or less, more preferably 48 mm or less, and even more preferably 41 mm or less.

The base metal of the clad steel plate of the present invention may have a plate thickness of 6 mm or more. The plate thickness of the base metal of the clad steel plate of the present invention is preferably 15 mm or more, and more preferably 20 mm or more. The base metal of the clad steel plate of the present invention may have a plate thickness of 60 mm or less. The plate thickness of the base metal is preferably 50 mm or less, more preferably 45 mm or less, and even more preferably 38 mm or less.

The cladding metal of the clad steel plate of the present invention may have a plate thickness of 1.0 mm or more. The plate thickness of the cladding metal of the clad steel plate of the present invention is preferably 2.0 mm or more, and more preferably 2.5 mm or more. The cladding metal of the clad steel plate of the present invention may have a plate thickness of 6.0 mm or less. The plate thickness of the cladding metal of the clad steel plate of the present invention is preferably 5.0 mm or less, and more preferably 4.0 mm or less.

The clad steel plate of the present invention may have a cladding ratio of 0.01 or more. The cladding ratio of the clad steel plate of the present invention is preferably 0.03 or more, and more preferably 0.05 or more. The clad steel plate of the present invention may have a cladding ratio of 0.50 or less. The cladding ratio of the clad steel plate of the present invention is preferably 0.40 or less, and more preferably 0.30 or less.

### (4) Welded Joint

In the present invention, a structure such as a tank is produced by welding the clad steel plate described above. The type of welding is not limited, and a steel plate welding method known in the related art may be used; TIG welding is preferred.

### [Heat Input: 50 kJ/cm or Less]

When a welded joint is produced using the clad steel plate of the present invention, the heat input is specified to be 50 kJ/cm or less. The heat input is preferably 40 kJ/cm or less. The heat input is more preferably 30 kJ/cm or less. By satisfying this heat input range, the properties described above may be achieved. The lower limit of the heat input is not limited. Since an excessive reduction in the heat input leads to a decrease in welding efficiency, the heat input is preferably 5.0 kJ/cm or more.

### (5) Production Conditions

In the present invention, first, a slab for the raw material of the base metal and a slab for the raw material of the cladding metal, each having the corresponding chemical composition described above, are produced. The method for producing these material slabs is not limited, and a slab production method known in the related art may be used. Specifically, molten steels adjusted by an ordinary steelmaking method (a converter method or an electric arc furnace method) to have the respective chemical compositions described above are cast by an ordinary casting method (a continuous casting method or an ingot casting method) to obtain material slabs.

Next, the obtained slab for the raw material of the base metal is heated to a surface temperature of 900°C or more and 1200°C or less, and then hot-rolled. The rolling finish temperature in the hot rolling is equal to or higher than the Ar₃ transformation temperature in terms of surface temperature, and a raw material of the base metal having predetermined dimensions is obtained. The obtained slab for the raw material of the cladding metal is heated and then hot-rolled to obtain a raw material of the cladding metal having predetermined dimensions.

### [Heating Temperature: 900°C or More and 1200°C or Less]

When the heating temperature of the slab for the raw material of the base metal in the clad steel plate of the present invention is less than 900°C, insufficient carbide dissolution results in a failure to reach the required strength. Accordingly, the heating temperature is 900°C or more in terms of surface temperature. The heating temperature is preferably 920°C or more.

When the heating temperature exceeds 1200°C, coarsening of crystal grains of the base metal may happen, which may lead to deterioration in toughness. Accordingly, the heating temperature is 1200°C or less in terms of surface temperature. The heating temperature is preferably 1150°C or less.

### [Rolling Finish Temperature (FT: Finishing Temperature): Ar₃ Transformation Temperature or Higher]

When the rolling finish temperature in the hot rolling is lower than the Ar₃ transformation temperature of the base metal, formed ferrite is affected by working, and therefore toughness deteriorates. Accordingly, the rolling finish temperature is equal to or higher than the Ar₃ transformation temperature in terms of surface temperature. The rolling finish temperature is preferably the Ar₃ transformation temperature + 50°C or higher.

The upper limit is not limited; however, the rolling finish temperature is preferably 980°C or less in terms of surface temperature.

Next, a clad material is formed by stacking at least two layers including the obtained raw material of base metal and the raw material of the cladding metal on a surface of the raw material of the base metal to be in contact with ammonia or the like, or three layers including a dummy material, the raw material of the cladding metal, and the raw material of the base metal, or even four layers including the raw material of the base metal, the raw material of the cladding metal, another raw material of the cladding metal, and another raw material of the base metal. The clad material is then pressure-bonded and, when necessary, subjected to appropriate heat treatment for microstructure control.

In the tables in Examples described below, a slab stacking method in which the base metal slab, the cladding metal slab, the cladding metal slab, and the base metal slab are stacked in the stated order from the top, or a slab stacking method in which the cladding metal slab, the base metal slab, the base metal slab, and the cladding metal slab are stacked in the stated order from the top is referred to as a sandwich method. A method in which the cladding metal slab and the base metal slab are stacked in the stated order from the top, or a method in which the base metal slab and the cladding metal slab are stacked in the stated order from the top is referred to as an open method. A method in which a dummy material, the cladding metal slab, and the base metal slab are stacked in the stated order from the top, or a method in which the base metal slab, the cladding metal slab, and a dummy material are stacked in the stated order from the top is referred to as a dummy material method.

A clad slab (assembled slab) obtained by stacking the raw material(s) of the base metal and the raw material(s) of the cladding metal is heated to a surface temperature in the range of 1000°C or more and 1250°C or less, and the clad slab is then hot-rolled. In the hot rolling in the present invention, the cumulative rolling reduction ratio is 65% or more, and the rolling finish temperature is equal to or higher than the Ar₃ transformation temperature and equal to or lower than 1000°C. After the clad slab is hot-rolled into a rolled plate having the base metal and the cladding metal, the rolled plate is subjected to the following treatment (A) or (B).
(A) The rolled plate after hot rolling is subjected to accelerated cooling from a temperature equal to or higher than the Ar₃ transformation temperature of the base metal to a cooling stop temperature of 500°C or less at an average cooling rate in the range of 3°C/s or more and 50°C/s or less. Alternatively, the rolled plate which is subjected to the accelerated cooling is then tempered at a temperature of 700°C or less.
(B) The rolled plate after hot rolling is cooled,
   then reheated to 800°C or more and 1000°C or less, subjected to accelerated cooling from a temperature equal to or higher than the Ar₃ transformation temperature of the base metal to a cooling stop temperature of 350°C or less at an average cooling rate in the range of 1.0°C/s or more and 20.0°C/s or less, and
   then tempered at a temperature of 600°C or more and 750°C or less.

### [Heating Temperature: 1000°C or More and 1250°C or Less]

When the heating temperature of the assembled slab obtained by stacking the raw material(s) of the base metal and the raw material(s) of the cladding metal is less than 1000°C, insufficient carbide dissolution may result in a failure to reach the required strength. In addition, the heating temperature is preferably high from the viewpoint of bondability of clad steel. Accordingly, the heating temperature is 1000°C or more. The heating temperature is preferably 1020°C or more.

When the assembled slab is heated at a temperature of more than 1250°C, coarsening of crystal grains of the base metal leads to deterioration in toughness. Accordingly, the heating temperature is 1250°C or less. The heating temperature is preferably 1230°C or less.

### [Cumulative Rolling Reduction Ratio of Assembled Slab: 65% or More]

Rolling of the assembled slab at a cumulative rolling reduction ratio of 65% or more promotes recrystallization of austenite, introduces deformation bands serving as nucleation sites into austenite grains, and refines bainite and martensite formed by transformation during subsequent accelerated cooling under the conditions described below to improve the toughness of the clad steel plate. Therefore, the cumulative rolling reduction ratio of the assembled slab is 65% or more. The cumulative rolling reduction ratio of the assembled slab is preferably 70% or more. The upper limit of the cumulative rolling reduction ratio is not limited; however, from the viewpoint of rolling efficiency, the cumulative rolling reduction ratio of the assembled slab is preferably 95% or less.

### [Rolling Finish Temperature (FT): Ar₃ Transformation Temperature or Higher and 1000°C or Less]

When the rolling finish temperature in the hot rolling is lower than the Ar₃ transformation temperature, formed ferrite is significantly affected by working, and therefore toughness may deteriorate. When the rolling finish temperature is lower than the Ar₃ transformation temperature, hot rolling at a low temperature degrades the bondability of the clad steel from the viewpoint of diffusion bonding. Accordingly, the rolling finish temperature is equal to or higher than the Ar₃ transformation temperature. The rolling finish temperature is preferably equal to or higher than the Ar₃ transformation temperature + 30°C.

When the rolling finish temperature exceeds 1000°C, deformation bands to serve as nucleation sites are not introduced into austenite grains, and neither fine bainite nor fine martensite is obtained, resulting in deterioration of the toughness of the clad steel plate. Accordingly, the rolling finish temperature is 1000°C or less. The rolling finish temperature is preferably 980°C or less.

### (Step (A) (Accelerated Cooling Step))

In the step (A), the rolled plate is subjected to accelerated cooling from a temperature equal to or higher than the Ar₃ transformation temperature of the base metal to a cooling stop temperature of 500°C or less at an average cooling rate in the range of 3°C/s or more and 50°C/s or less.

Alternatively, the rolled plate which is subjected to the accelerated cooling is then tempered at a temperature of 700°C or less. The phrase "from a temperature equal to or higher than the Ar₃ transformation temperature of the base metal" means that the surface temperature of the base metal at the start of accelerated cooling is equal to or higher than the Ar₃ transformation temperature of the base metal.

### [Cooling Start Temperature: Ar₃ Transformation Temperature or Higher]

The steel plate after the hot rolling is cooled from a temperature equal to or higher than the Ar₃ transformation temperature of the base metal. When the start temperature of the cooling is lower than the Ar₃ transformation temperature of the base metal, ferrite is excessively formed and is present together with a martensite microstructure or bainite having a large strength difference from the ferrite. As a result, the base metal has insufficient strength and deteriorated toughness. Accordingly, the cooling start temperature after the hot rolling is equal to or higher than the Ar₃ transformation temperature. The cooling start temperature is preferably equal to or higher than the Ar₃ transformation temperature + 20°C.

This cooling (accelerated cooling) is preferably performed immediately after the hot rolling, without natural cooling to room temperature or reheating the rolled plate to 800°C or more and 1000°C or less.

The Ar₃ transformation temperature may be determined from the following formula. 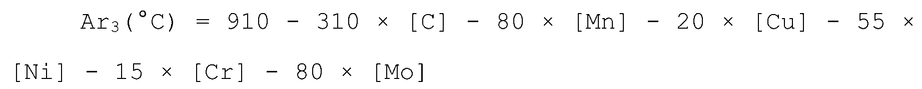 Ar3(°C) = 910 - 310 × [C] - 80 × [Mn] - 20 × [Cu] - 55 × [Ni] - 15 × [Cr] - 80 × [Mo]

In the formula, [M] represents the content (mass%) of element M in the steel plate (base metal) and is 0 (zero) for element M not contained.

### [Average Cooling Rate of Steel Plate: 3°C/s or More and 50°C/s or Less]

Cooling at an average cooling rate of 3°C/s or more is an essential process for producing a steel plate having high strength and high toughness. Cooling at a high rate provides a strength improving effect through transformation strengthening. When the average cooling rate is less than 3°C/s, the grain size of bainite or martensite may increase, or ferrite or pearlite may be formed, which may result in insufficient strength or deterioration in toughness. Accordingly, the average cooling rate is 3°C/s or more. The average cooling rate is preferably 5°C/s or more, and more preferably 10°C/s or more.

When the average cooling rate exceeds 50°C/s, the volume fraction of martensite becomes excessively high, and toughness may decrease. In addition, the bonding ratio between the base metal and the cladding metal may decrease. Accordingly, the average cooling rate is 50°C/s or less. The average cooling rate is preferably 45°C/s or less. The average cooling rate in the accelerated cooling is determined by dividing a difference (°C) between the cooling start temperature and the cooling stop temperature at a 1/2-thickness position in the plate thickness direction of a base metal steel plate by a cooling time (s).

The cooling start temperature and the cooling stop temperature at the 1/2-thickness position in the plate thickness direction of the raw material of the base metal are obtained by measuring the temperature of the steel plate surface with a radiation thermometer and determining the temperature at the 1/2-thickness position by difference calculus. The cooling time refers to the period of time during which cooling water is supplied to the steel plate, and the cooling time is defined as the time required for the 1/2-thickness position to cool from the cooling start temperature to the cooling stop temperature.

### [Cooling Stop Temperature: 500°C or Less]

In the present invention, cooling under the conditions described above to a cooling stop temperature of 500°C or less allows uniform formation of a predetermined volume fraction of bainite or martensite up to the center in the plate thickness of the base metal. When the cooling stop temperature exceeds 500°C, ferrite or pearlite microstructure is excessively formed, which results in insufficient strength or deterioration in toughness. Accordingly, the cooling stop temperature is specified to be 500°C or less. The cooling stop temperature is preferably 300°C or less. When the accelerated cooling step is followed by tempering described below, the cooling stop temperature is preferably 300°C or less, and more preferably 280°C or less.

The lower limit of the cooling stop temperature is not limited and may be room temperature. From the viewpoint of production efficiency or the like, the lower limit of the cooling stop temperature is preferably 100°C.

After being subjected to the accelerated cooling in the treatment of the step (A) to the cooling stop temperature, as necessary, the cooled clad steel plate may be then tempered at a temperature of 700°C or less. In other words, in the treatment of the step (A), the clad steel plate may not be tempered after the accelerated cooling described above, or may be tempered at a temperature of 700°C or less after the accelerated cooling.

### [Tempering Temperature: 700°C or Less]

In the present invention, the cooled clad steel plate may be tempered as necessary for the purpose of restoration of the toughness of the base metal. When the average steel plate temperature (the temperature at the 1/2-thickness position of the steel plate) exceeds 700°C during reheating in the tempering, elimination or dispersion of dislocation may occur, and the strength of the base metal may decrease. Accordingly, the tempering temperature is 700°C or less. The tempering temperature is preferably 680°C or less. The tempering temperature is preferably 550°C or more. The tempering temperature is more preferably 600°C or more.

### (Step (B) (Reheating and Subsequent Accelerated Cooling))

Instead of the step (A) described above, the step (B) involves cooling the rolled plate, then reheating the rolled plate to 800°C or more and 1000°C or less, and subjecting the rolled plate to accelerated cooling from a temperature equal to or higher than the Ar₃ transformation temperature of the base metal to a cooling stop temperature of 350°C or less at an average cooling rate in the range of 1.0°C/s or more and 20.0°C/s or less.

The temperature equal to or higher than the Ar₃ transformation temperature of the base metal refers to the surface temperature of the base metal.

The phrase "from a temperature equal to or higher than the Ar₃ transformation temperature of the base metal" means that the surface temperature of the base metal at the start of accelerated cooling is equal to or higher than the Ar₃ transformation temperature of the base metal.

After the hot rolling, the cooling before reheating may be performed to room temperature (-5°C to 50°C). The cooling rate in this cooling is not necessarily specified, but may be, for example, 0.01°C/s to 1°C/s in natural cooling.

### [Reheating Temperature: 800°C or More and 1000°C or Less]

When the reheating temperature of the rolled plate having the base metal and the cladding metal is less than 800°C, the strength may become excessive, and the toughness may not be restored. In addition, the bonding ratio may decrease. Accordingly, the reheating temperature is 800°C or more. The reheating temperature is preferably 820°C or more.

When the reheating temperature exceeds 1000°C, the strength may be insufficient. Accordingly, the reheating temperature is 1000°C or less. The reheating temperature is preferably 980°C or less.

### [Cooling Start Temperature: Ar₃ Transformation Temperature or Higher]

The steel plate after the reheating is cooled from a temperature equal to or higher than the Ar₃ transformation temperature of the base metal. The phrase "from a temperature equal to or higher than the Ar₃ transformation temperature of the base metal" means that the surface temperature of the base metal at the start of accelerated cooling is equal to or higher than the Ar₃ transformation temperature of the base metal. When the start temperature of the cooling is lower than the Ar₃ transformation temperature of the base metal, ferrite is excessively formed and is present together with a martensite or bainite microstructure having a large strength difference from the ferrite. As a result, the base metal has insufficient strength and deteriorated toughness. Accordingly, the cooling start temperature after the reheating is equal to or higher than the Ar₃ transformation temperature. In addition, the cooling start temperature is preferably equal to or higher than the Ar₃ transformation temperature + 20°C. The Ar₃ transformation temperature may be determined from the following formula. 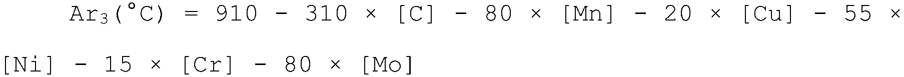 Ar3(°C) = 910 - 310 × [C] - 80 × [Mn] - 20 × [Cu] - 55 × [Ni] - 15 × [Cr] - 80 × [Mo]

In the formula, [M] represents the content (mass%) of element M in the steel plate (base metal) and is 0 (zero) for element M not contained.

### [Average Cooling Rate of Steel Plate: 1.0°C/s or More and 20.0°C/s or Less]

Cooling at an average cooling rate of 1.0°C/s or more is an essential process for producing a steel plate having high strength and high toughness. Cooling at a high rate provides a strength improving effect through transformation strengthening. When the average cooling rate is less than 1.0°C/s, the grain size of bainite or martensite may increase, and ferrite or pearlite may be formed, which may result in insufficient strength or deterioration in toughness. Accordingly, the average cooling rate is 1.0°C/s or more. The average cooling rate is preferably 1.5°C/s or more.

When the average cooling rate exceeds 20.0°C/s, the volume fraction of martensite becomes excessively high, and toughness may decrease. In addition, the bondability may decrease. Accordingly, the average cooling rate is 20.0°C/s or less. The average cooling rate is preferably 15.0°C/s or less.

The average cooling rate in the accelerated cooling is determined by dividing a difference (°C) between the cooling start temperature and the cooling stop temperature at the 1/2-thickness position in the plate thickness direction of the base metal steel plate by a cooling time (s).

### [Cooling Stop Temperature: 350°C or Less]

In the present invention, cooling under the conditions described above to a cooling stop temperature of 350°C or less after completion of reheating allows uniform formation of a predetermined volume fraction of bainite or martensite up to the center in the plate thickness of the base metal. When the cooling stop temperature exceeds 350°C, ferrite or pearlite microstructure is excessively formed, which results in insufficient strength or deterioration in toughness. Accordingly, the cooling stop temperature is specified to be 350°C or less. The cooling stop temperature is preferably 300°C or less. The lower limit of the cooling stop temperature is not limited and may be room temperature. From the viewpoint of production efficiency or the like, the lower limit of the cooling stop temperature is preferably 100°C.

The cooled clad steel plate is then tempered at a temperature of 600°C or more and 750°C or less after being subjected to the accelerated cooling in the treatment of the step (B) to the cooling stop temperature.

### [Tempering Temperature: 600°C or More and 750°C or Less]

In the present invention, the clad steel plate is tempered for the purpose of restoration of the toughness of the base metal.

When the average steel plate temperature (the temperature at the 1/2-thickness position of the steel plate) exceeds 750°C during reheating in the tempering, elimination or dispersion of dislocation may occur, and the strength of the base metal may decrease. Accordingly, the tempering temperature is 750°C or less. The tempering temperature is preferably 730°C or less.

When the average steel plate temperature is less than 600°C during reheating in the tempering, the base metal may have insufficient toughness. Accordingly, the tempering temperature is 600°C or more. The tempering temperature is preferably 620°C or more.

The temperature of the raw material of the steel plate or the clad steel plate in the present invention refers to the temperature at the 1/2-thickness position of the base metal. The temperature may be a value obtained, for example, by performing difference calculus using a process computer based on the temperature of the steel plate surface measured with a radiation thermometer.

The clad steel plate according to the present invention may be obtained by subjecting the material steel plates used for the base metal and the cladding metal and having the chemical compositions described above to the production conditions described above. The high-strength clad steel plate according to the present invention thus obtained has high low-temperature toughness, high ammonia SCC resistance, and good bondability.

In the production method according to the present invention, conventional methods may be used for any items not described in the present description.

### EXAMPLES

Table 1 shows the chemical composition of the base metal (the balance being Fe and unavoidable impurities). In the table, steel grades A to T are Inventive Examples within the scope of the present invention. Steel grades U to AK are Comparative Examples in which at least one component is outside the scope of the present invention.

Table 2 shows the chemical composition of the cladding metal (the balance being Fe and unavoidable impurities). In the table, steel grades a to m are Inventive Examples within the scope of the present invention. Steel grades n to p are Comparative Examples in which the PRE value is outside the scope of the present invention.

Blank cells in Tables 1 and 2 indicate that the corresponding element is not contained or is contained as an unavoidable impurity.

**[Table 1]**

| Steel Grade | Chemical Composition (mass%) | | | | | | | | | | | | | | | | | Pcm |
|---|---|---|---|---|---|---|---|---|---|---|---|---|---|---|---|---|---|---|
| | C | Si | Mn | P | S | Al | N | O | Cu | Ni | Cr | Mo | Nb | Ti | V | B | Ca | |
| A | 0.109 | 0.24 | 0.99 | 0.006 | 0.001 | 0.050 | 0.0038 | 0.0011 | 0.18 | 0.83 | 0.48 | 0.42 | | 0.014 | 0.031 | 0.0009 | 0.0016 | 0.249 |
| B | 0.068 | 0.18 | 1.44 | 0.005 | 0.001 | 0.030 | 0.0030 | 0.0014 | 0.22 | 0.37 | 0.30 | 0.20 | 0.025 | | 0.042 | | | 0.196 |
| C | 0.152 | 0.31 | 1.40 | 0.006 | 0.002 | 0.051 | 0.0039 | 0.0015 | 0.05 | | 0.18 | 0.11 | 0.021 | 0.012 | 0.035 | | 0.0028 | 0.255 |
| D | 0.091 | 0.28 | 1.20 | 0.008 | 0.001 | 0.038 | 0.0045 | 0.0022 | | 0.45 | 0.21 | 0.11 | 0.018 | | 0.048 | | | 0.190 |
| E | 0.130 | 0.26 | 0.81 | 0.005 | 0.001 | 0.053 | 0.0029 | 0.0015 | 0.42 | 0.71 | 0.41 | 0.28 | | 0.009 | 0.036 | 0.0010 | 0.0015 | 0.260 |
| F | 0.085 | 0.17 | 1.40 | 0.007 | 0.001 | 0.033 | 0.0041 | 0.0038 | | | | | 0.018 | | | | 0.0013 | 0.161 |
| G | 0.090 | 0.22 | 1.52 | 0.012 | 0.003 | 0.028 | 0.0043 | 0.0008 | | | | 0.21 | 0.022 | | 0.052 | | | 0.193 |
| H | 0.134 | 0.15 | 0.53 | 0.004 | 0.001 | 0.046 | 0.0042 | 0.0008 | 0.11 | 1.08 | 0.69 | 0.47 | | 0.010 | 0.038 | 0.0011 | 0.0024 | 0.264 |
| I | 0.070 | 0.25 | 1.32 | 0.006 | 0.001 | 0.034 | 0.0036 | 0.0010 | 0.39 | 1.35 | 0.52 | 0.58 | | 0.012 | 0.041 | 0.0010 | 0.0020 | 0.260 |
| J | 0.088 | 0.29 | 1.21 | 0.007 | 0.002 | 0.029 | 0.0033 | 0.0028 | 0.33 | 1.11 | | | | 0.015 | 0.033 | | 0.0022 | 0.196 |
| K | 0.046 | 0.26 | 1.58 | 0.007 | 0.001 | 0.035 | 0.0031 | 0.0022 | 0.14 | 0.18 | 0.21 | 0.07 | 0.038 | 0.011 | 0.034 | | 0.0030 | 0.162 |
| L | 0.065 | 0.27 | 1.42 | 0.011 | 0.001 | 0.065 | 0.0039 | 0.0022 | 0.22 | 0.43 | | | 0.035 | | 0.053 | | 0.0012 | 0.168 |
| M | 0.103 | 0.23 | 1.59 | 0.009 | 0.002 | 0.029 | 0.0038 | 0.0012 | 0.17 | 0.32 | 0.25 | | 0.031 | 0.016 | | | 0.0013 | 0.217 |
| N | 0.169 | 0.19 | 1.38 | 0.011 | 0.002 | 0.037 | 0.0037 | 0.0028 | 0.15 | | 0.17 | | | 0.012 | | | 0.0015 | 0.260 |
| O | 0.110 | 0.06 | 1.58 | 0.008 | 0.002 | 0.028 | 0.0078 | 0.0027 | | 0.45 | | 0.11 | 0.029 | | 0.019 | | | 0.208 |
| P | 0.140 | 0.40 | 1.50 | 0.012 | 0.002 | 0.045 | 0.0027 | 0.0026 | 0.47 | 0.22 | 0.16 | | 0.016 | 0.008 | 0.043 | | 0.0010 | 0.268 |
| Q | 0.057 | 0.11 | 1.49 | 0.004 | 0.003 | 0.038 | 0.0036 | 0.0023 | 0.15 | 0.26 | | | 0.014 | 0.011 | | 0.0049 | 0.0008 | 0.172 |
| R | 0.031 | 0.37 | 1.59 | 0.004 | 0.009 | 0.047 | 0.0044 | 0.0047 | 0.26 | 0.17 | | 0.60 | | | 0.035 | | | 0.182 |
| S | 0.143 | 0.14 | 1.35 | 0.006 | 0.003 | 0.029 | 0.0027 | 0.0028 | | 0.40 | 0.21 | | | | 0.098 | | 0.0012 | 0.242 |
| T | 0.112 | 0.35 | 1.53 | 0.008 | 0.002 | 0.033 | 0.0034 | 0.0027 | 0.39 | | | | | | | 0.0006 | | 0.223 |
| **U** | **0.028** | 0.33 | 1.49 | 0.005 | 0.001 | 0.032 | 0.0045 | 0.0022 | 0.46 | 0.88 | 0.41 | 0.15 | | 0.012 | 0.047 | 0.0010 | | 0.191 |
| **V** | **0.172** | 0.20 | 1.52 | 0.008 | 0.002 | 0.034 | 0.0036 | 0.0013 | 0.11 | 0.45 | | | 0.025 | 0.011 | | | | 0.268 |
| **W** | 0.063 | **0.45** | 1.25 | 0.007 | 0.002 | 0.054 | 0.0033 | 0.0027 | 0.22 | 0.45 | 0.33 | 0.24 | 0.028 | | 0.038 | | | 0.195 |
| **X** | 0.066 | 0.17 | 1.54 | **0.021** | 0.002 | 0.025 | 0.0033 | 0.0018 | 0.37 | 0.83 | 0.58 | 0.17 | | 0.010 | 0.044 | 0.0008 | | 0.230 |
| **Y** | 0.090 | 0.07 | 1.46 | 0.009 | **0.011** | 0.049 | 0.0049 | 0.0034 | 0.10 | 0.72 | 0.68 | 0.11 | | 0.015 | 0.045 | 0.0028 | | 0.242 |
| **Z** | 0.055 | 0.38 | 1.38 | 0.018 | 0.004 | **0.075** | 0.0053 | 0.0021 | | 0.70 | 0.48 | 0.20 | 0.032 | 0.015 | | 0.0014 | | 0.193 |
| **AA** | 0.058 | 0.12 | 1.46 | 0.015 | 0.001 | 0.037 | **0.0082** | 0.0029 | 0.13 | 0.96 | 0.49 | 0.23 | 0.031 | 0.018 | 0.038 | 0.0023 | 0.0022 | 0.213 |
| **AB** | 0.062 | 0.37 | 0.52 | 0.010 | 0.002 | 0.026 | 0.0037 | **0.0054** | 0.34 | 1.03 | 0.48 | 0.22 | | 0.011 | 0.044 | | | 0.178 |
| **AC** | 0.081 | 0.21 | 1.33 | 0.007 | 0.002 | 0.024 | 0.0034 | 0.0022 | **0.60** | 0.21 | | | | | 0.051 | | | 0.193 |
| **AD** | 0.036 | 0.37 | 1.19 | 0.016 | 0.003 | 0.041 | 0.0047 | 0.0035 | 0.44 | 0.87 | **1.62** | 0.40 | | 0.011 | 0.035 | | | 0.256 |
| **AE** | 0.082 | 0.09 | 1.45 | 0.018 | 0.002 | 0.037 | 0.0035 | 0.0038 | | 0.91 | 0.65 | **0.61** | | 0.009 | 0.077 | 0.0022 | | 0.265 |
| **AF** | 0.135 | 0.10 | 0.84 | 0.009 | 0.001 | 0.019 | 0.0070 | 0.0032 | 0.13 | 1.11 | 0.63 | 0.35 | **0.061** | 0.018 | 0.036 | | | 0.264 |
| **AG** | 0.132 | 0.22 | 1.25 | 0.013 | 0.002 | 0.048 | 0.0060 | 0.0017 | 0.32 | 0.89 | | | | **0.026** | 0.065 | 0.0014 | | 0.246 |
| **AH** | 0.100 | 0.18 | 1.08 | 0.014 | 0.002 | 0.039 | 0.0045 | 0.0037 | 0.15 | 1.02 | 0.38 | 0.42 | | 0.011 | **0.103** | | 0.0025 | 0.242 |
| **AI** | 0.095 | 0.34 | 0.99 | 0.012 | 0.001 | 0.042 | 0.0063 | 0.0043 | | 0.92 | 0.64 | 0.34 | 0.018 | 0.016 | 0.086 | **0.0052** | 0.0019 | 0.260 |
| **AJ** | 0.071 | 0.22 | 1.35 | 0.012 | 0.003 | 0.038 | 0.0029 | 0.0033 | | 0.11 | | | | - | | | | **0.148** |
| **AK** | 0.094 | 0.36 | 1.55 | 0.013 | 0.001 | 0.044 | 0.0044 | 0.0041 | 0.45 | 1.25 | 0.65 | 0.54 | 0.038 | | 0.077 | 0.0013 | | **0.310** |

| | | | | | | | | | | | | | | | | | | |
|---|---|---|---|---|---|---|---|---|---|---|---|---|---|---|---|---|---|---|
| * Underlining and boldface indicate entries outside the scope of the present invention. · The balance other than the above chemical components is Fe and unavoidable impurities. | | | | | | | | | | | | | | | | | | |

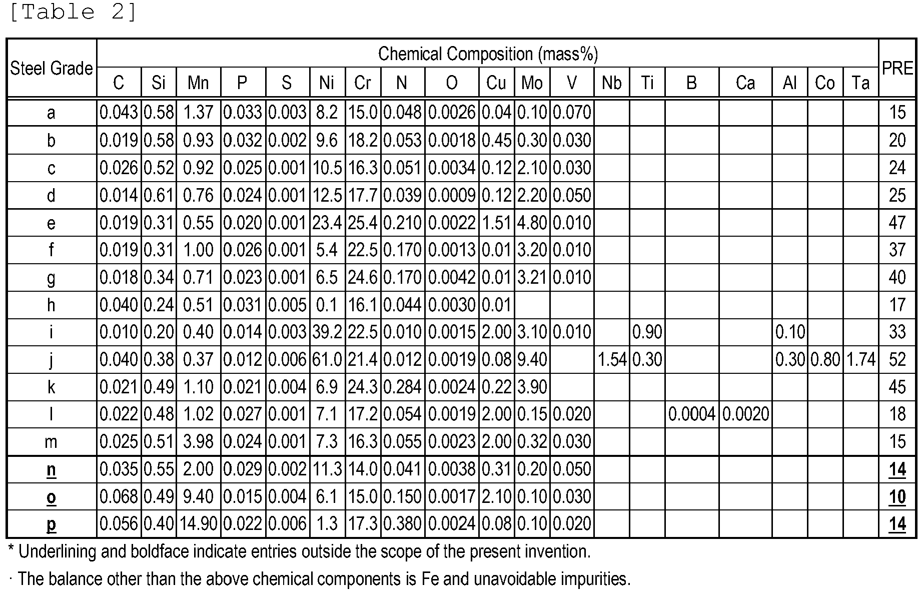

Clad steel plates (Nos. 1 to 98) were produced under the production conditions shown in Table 3 using slabs for the raw material of the base metal that had the chemical compositions shown in Table 1 and slabs for the raw material of the cladding metal that had the chemical compositions shown in Table 2.

A test plate for a joint was taken from each of the obtained steel plates, and welded joints were produced. The welding method was TIG welding with the heat input shown in Table 3, and multilayer welding was performed from the base metal side toward the cladding metal side.

Slab assembly was carried out by any one of the sandwich method, the open method, and the dummy material method. In Tables 3-1 and 3-2, the sandwich method is a method in which a base metal slab, a cladding metal slab, a cladding metal slab, and a base metal slab are stacked in the stated order from the top; the open method is a method in which a cladding metal slab and a base metal slab are stacked in the stated order from the top; and the dummy material method is a method in which a dummy material, a cladding metal slab, and a base metal slab are stacked in the stated order from the top.

The obtained clad steel plates were evaluated for strength properties and toughness, bonding ratio, and ammonia SCC resistance in a liquid ammonia environment. Each test method is as follows.

### [Strength Properties]

Each clad steel plate was reduced in thickness from the cladding metal side, and a No. 1B test specimen specified in JIS Z 2201 was taken from the full thickness of the base metal. The test specimen was then subjected to a tensile test in accordance with the procedure described in JIS Z 2241 (2022), and the yield strength YS (when a yield point was present, the yield point YP (lower yield point YP); when no yield point was present, the 0.2% proof stress σ0.2) and the tensile strength (TS) were measured. The steel plates having a base metal with a tensile strength of 620 MPa or more were evaluated as having good tensile properties.

### [Toughness]

To evaluate the toughness of the base metal of each clad steel plate, a V-notch test specimen specified in JIS Z 2202 was taken such that the 1/2-thickness position of the base metal of the clad steel plate was located at the center in the thickness direction. To evaluate the toughness of the welded joint of each clad steel plate, a V-notch test specimen specified in JIS Z 2202 was taken from a position in a weld heat-affected zone of the base metal of the clad steel plate in the welded joint, the position being centered in the thickness direction at the 1/2-thickness position of the base metal of the clad steel plate. The absorbed energy was measured by subjecting three test specimens for each condition to a Charpy impact test at -50°C for the base metal and at -40°C for the heat-affected zone of the welded joint in accordance with the procedure described in JIS Z 2242 (2023). The steel plates or welded joints for which the absorbed energies of all three test specimens were 47 J or more were evaluated as having good toughness. In Tables 3-1 and 3-2, the smallest value among the absorbed energies of the three test specimens is shown.

### [Bonding Ratio]

The bonding ratio at the bonding interface of each clad steel plate was determined as follows. Specifically, a cross section including the base metal and the cladding metal of each clad steel plate was mirror-polished, and ten fields of view each including a region having a length of 1.0 × 10⁻¹ mm in a direction along a randomly selected interface in the cross section were observed at a magnification of 1000 times using a scanning electron microscope (SEM). The bonding interface length was determined by image analysis. The bonding ratio was then determined using the following formula based on the total measurement length and the bonding interface length. Bonding ratio (%): 100 × bonding interface length (mm)/total measurement length (mm)

The bonding interface length is a total length of portions determined, as a result of image analysis, to have neither voids nor oxides present at the interface. The steel plates having a bonding ratio of 70% or more were evaluated as having good bondability.

### [Ammonia SCC Resistance]

The ammonia SCC resistance in the present invention was evaluated by applying a potential to a test specimen to which stress was applied by four-point bending in a test solution.

Specifically, the test specimen was evaluated according to the following procedure.

The clad steel plate according to the present invention is used such that the cladding metal comes into contact with ammonia or the like. Therefore, first, a test specimen measuring 1.5 to 3.0 mm in thickness × 15 mm × 115 mm was taken from a cladding metal portion by subjecting the clad steel plate to thickness reduction machining from the base metal side. When the cladding metal had a thickness of more than 3.0 mm, a test specimen having a thickness of 3.0 mm was taken from a surface of the cladding metal the surface of which was not bonded to the base metal. The obtained test specimen was subjected to ultrasonic degreasing in acetone for 5 minutes. A stress equivalent to 100% of the yield strength YS of the base metal corresponding to each test specimen was applied to the corresponding test specimen by four-point bending. The test specimen subjected to four-point bending was placed in a test cell. Subsequently, the test cell was filled with a solution prepared by mixing 2 L of liquid ammonia having a purity of 99.999% or more with ammonium carbamate: 5.00 mass%, O₂: 1.000 bar, and water: 0.10 mass%. Specifically, predetermined amounts of ammonium carbamate and water were placed in the test cell, O₂ gas was further blown into the test cell, and then liquid ammonia was placed in the test cell. The solution volume to specimen area ratio, which is the ratio of the volume of the immersion liquid to the surface area of the immersion test specimen, was 42 mL/cm². Stirring during the test was continuously performed at 10 rpm using a stirrer placed in the test cell. The temperature of the test liquid was set to 25°C. After the temperature of the test liquid was adjusted to 25°C, the corrosion potential of the test specimen was measured using a potentiostat. Measurement of the potential and application of the potential using the potentiostat were performed by a three-electrode method, and platinum electrodes were used as both a reference electrode and a counter electrode. When one hour had elapsed from the start of measurement of the corrosion potential, the potential was determined to have stabilized, and, at that time, the potential applied to the test specimen was controlled to be +0.5 V vs. Pt, and the immersion test was started. After 504 hours had elapsed from the start of the immersion test, the test specimen was taken out of the test cell. Corrosion products on the surface of the test specimen were removed, and cracking was visually observed on the surface and in the cross section of the specimen to evaluate cracking. In Examples, nine test specimens were used for each condition in the 504 hour-immersion test. When cracks having a depth of 1.5 mm or more were observed in two or fewer test specimens among the nine test specimens, ammonia SCC resistance was determined to be good (○); when such cracks occurred in three or more test specimens, ammonia SCC resistance was determined to be poor (×).

The obtained evaluation results are also shown in Table 3.

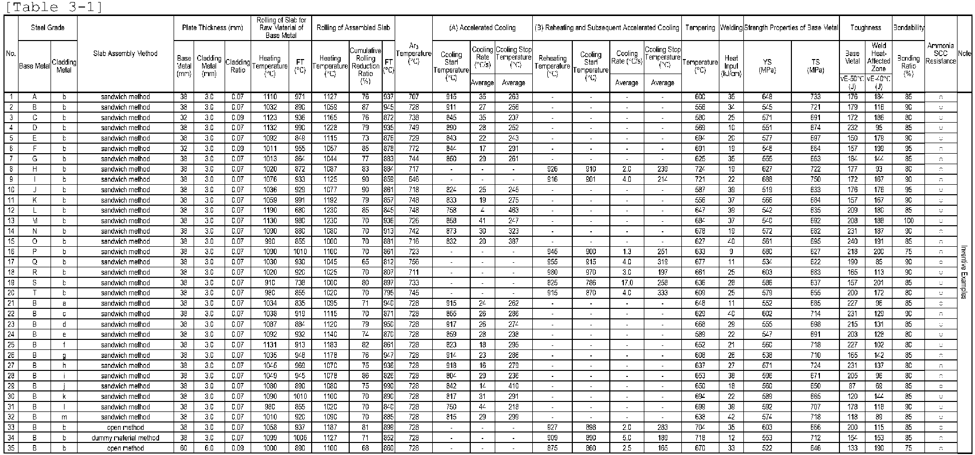

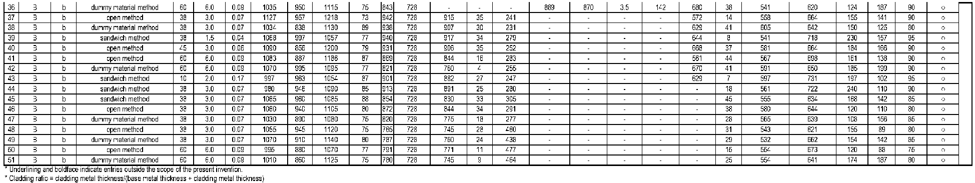

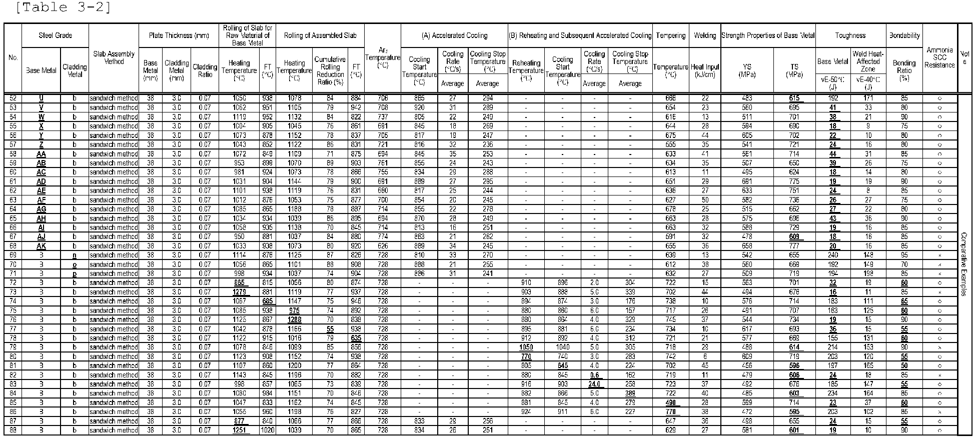

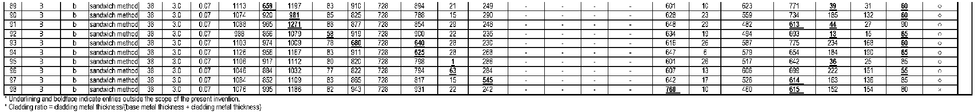

Table 3 indicates that, in all of Inventive Examples, the tensile strength is 620 MPa or more, the base metal has an absorbed energy of 47 J or more in the Charpy impact test at -50°C, and the bonding ratio between the base metal and the cladding metal is 70% or more. In addition, all of Inventive Examples are found to have high ammonia SCC resistance.

Table 3-2 indicates that Nos. 52 to 70 have chemical compositions outside the scope of the present invention and therefore are inferior in at least one of tensile strength TS, low-temperature toughness, and ammonia SCC resistance. Nos. 71 to 98 have chemical compositions within the scope of the present invention but are produced under production conditions outside the scope of the present invention; therefore, Nos. 71 to 98 are inferior in at least one of tensile strength TS, low-temperature toughness, bonding ratio, and ammonia SCC resistance.

## Claims

1. A clad steel plate comprising a cladding metal on at least one surface of a base metal,
wherein the base metal has a chemical composition containing:
in mass%,
C: 0.030% to 0.170%,
Si: 0.05% to 0.40%,
Mn: 0.05% to 1.60%,
P: 0.020% or less,
S: 0.010% or less,
Al: 0.018% to 0.070%,
N: 0.0020% to 0.0080%, and
O (oxygen): 0.0050% or less, and
the base metal further containing one or two or more selected from:
Cu: 0.50% or less,
Ni: 2.10% or less,
Cr: 0.70% or less,
Mo: 0.60% or less,
Nb: 0.040% or less,
Ti: 0.020% or less,
V: 0.100% or less,
B: 0.0050% or less, and
Ca: 0.0040% or less,
with Pcm represented by formula (1) being 0.16 or more and 0.28 or less, and the balance being Fe and unavoidable impurities; and
the cladding metal has a PRE value represented by formula (2) of 15 or more,
the base metal has a tensile strength of 620 MPa or more,
the base metal has an absorbed energy of 47 J or more in a Charpy impact test at -50°C, and
a bonding ratio between the base metal and the cladding metal is 70% or more: 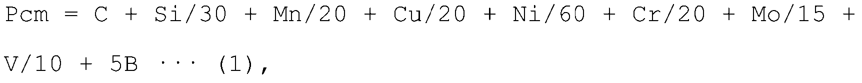 Pcm = C + Si/30 + Mn/20 + Cu/20 + Ni/60 + Cr/20 + Mo/15 + V/10 + 5B (1), $PRE = Cr % + 3.3 Mo % + 30 N % - Mn %$ (2),
in formula (1), each element symbol represents a content (mass%) of a corresponding element in the base metal;
in formula (2), M% represents a content (mass%) of element M in the cladding metal; and in each formula, a value for an element not contained is 0 (zero).

2. A welded joint comprising the clad steel plate according to Claim 1,
wherein a weld heat-affected zone has an absorbed energy of 47 J or more in a Charpy impact test at -40°C.

3. A method for producing the clad steel plate according to Claim 1, the method comprising:
heating a slab for the raw material of the base metal to a surface temperature of 900°C or more and 1200°C or less, and then hot-rolling the heated slab for the raw material of the base metal at a rolling finish temperature equal to or higher than an Ar₃ transformation temperature in terms of surface temperature to obtain a raw material of base metal;
heating a slab for the raw material of the cladding metal and then hot-rolling the heated slab for the raw material of the cladding metal to obtain a raw material of cladding metal;
heating, to a surface temperature of 1000°C or more and 1250°C or less, an assembled slab obtained by stacking the base metal and the cladding metal;
then hot-rolling the heated assembled slab at a cumulative rolling reduction ratio of 65% or more and at a rolling finish temperature equal to or higher than the Ar₃ transformation temperature and equal to or lower than 1000°C to produce a rolled plate including the base metal and the cladding metal; and
performing a treatment (A) or (B) below on the rolled plate:
(A) subjecting the rolled plate after hot rolling to accelerated cooling from a temperature equal to or higher than the Ar₃ transformation temperature of the base metal to a cooling stop temperature of 500°C or less at an average cooling rate in a range of 3°C/s or more and 50°C/s or less, with or without subsequent tempering the rolled plate at a temperature of 700°C or less; or
(B) cooling the rolled plate after hot rolling,
then reheating the rolled plate to 800°C or more and 1000°C or less,
subjecting the rolled plate to accelerated cooling from a temperature equal to or higher than the Ar₃ transformation temperature of the base metal to a cooling stop temperature of 350°C or less at an average cooling rate in a range of 1.0°C/s or more and 20.0°C/s or less, and
then tempering the rolled plate at a temperature of 600°C or more and 750°C or less.

4. A welded joint production method for producing a welded joint by performing welding using the clad steel plate according to Claim 1 under a condition of a heat input of 50 kJ/cm or less.
